# EUROPÄISCHE PATENTANMELDUNG

(11) **EP 0 854 656 A2**
(43) Veröffentlichungstag der Anmeldung: **22.07.1998**
(21) Anmeldenummer: 97116739.0
(22) Anmeldetag: 25.09.1997
(51) Int. Cl.: H04Q 3/47

(54) **Verfahren zum Vermitteln von Fernmelderufen zu Teilnehmern eines Telekommunikationsnetzes, die bei einem Anschlusswechsel ihre ursprüngliche Rufnummer beibehalten haben**

(30) Priorität: 27.09.1996 DE 19640001
(71) Anmelder: SIEMENS AKTIENGESELLSCHAFT, 80333 München (DE)
(72) Erfinder: Kreusch, Norbert, Dipl.-Ing., 82061 Neuried (DE); Pfaehler, Wolfgang, Dipl.Phys., 85221 Dachau (DE)

(57) **Zusammenfassung**

Beim erstmaligen Ruf zu einem Teilnehmer, der unter Beibehaltung seiner Rufnummer (089/4712) zu einer anderen Vermittlungsstelle (VST#48) insbesondere eines anderen Betreibers gewechselt hat, werden von der Vermittlungsstelle (VST#16) des rufenden Teilnehmers (089/1601) aus über eine zu einer geeigneten Datenbasis hergestellten Verbindung die Daten des neuen Anschlußortes ermittelt und gespeichert. Nachfolgende Rufe zum selben Teilnehmer werden unter Verwendung der gespeicherten Anschlußdaten abgewickelt. Hierdurch wird vermieden, daß Betreiber nicht mit Suchprozeduren nach Teilnehmern belastet werden, die nicht mehr ihrem Einzugsbereich angehören, sofern der Ruf nicht aus ihrem Einzugsbereich heraus erfolgt.

## Beschreibung

Die Erfindung betrifft ein Verfahren zum Vermitteln von Fernmelderufen zu Teilnehmern eines Telekommunikationsnetzes, die bei einem Anschlußwechsel von einer Vermittlungsstelle zu einer anderen ihre ursprüngliche Rufnummer beibehalten haben.

In Ländern, in denen bisher nur das öffentliche Fernsprechnetz eines einzigen Betreibers existierte, mußte bei einem Wechsel eines Teilnehmers in den Einzugsbereich einer anderen Vermittlungsstelle eine Rufnummernänderung in Kauf genommen werden, da die Vermittlungsstellenkennzahl Teil der Rufnummer ist (z. B. in 089/7554848 755 für Vst München Forstenried).

Eine Situation häufiger Vermittlungsstellenwechsel wird zukünftig insbesondere in deregulierten Telekommunikationsnetzen gegeben sein, die aus unterschiedlichen Netzbetreibern gehörenden und in ihrem räumlichen Einzugsbereich sich zumindest teilweise überlappenden Teilnetzen bestehen. In solchen deregulierten Netzen kommt dann ein Wechsel von Teilnehmern vom Teilnetz eines Betreibers zu demjenigen eines anderen Betreibers auch ohne Standortwechsel des Teilnehmers vor, nämlich dann, wenn die Betreiber unterschiedliche Preisgestaltungen für Telekommunikationsdienste anbieten. Es wird daher mit einer beträchtlichen Fluktuation gerechnet und damit, daß ein großer Teil der wechselnden Teilnehmer von der gebotenen Möglichkeit der Beibehaltung ihrer ursprünglichen Teilnehmernummer Gebrauch machen wird. Für Rufnummern von Teilnehmern, die einen solchen Wechsel vorgenommen haben, stellt die Vermittlungsstellenkennzahl der Rufnummer dann also keine Adressierinformation mehr dar.

Bei Wechsel eines Teilnehmers von einer Vermittlungsstelle zu einer anderen unter Beibehaltung der Rufnummer kann so vorgegangen werden, daß in der Vermittlungssstelle, an der der Teilnehmer ursprünglich angeschlossen war, administrativ eine Umlenkverbindung eingerichtet wird. Bei einem weiteren Wechsel des Teilnehmers muß die Umlenkverbindung wieder geändert werden, wenn nicht in Kauf genommen werden soll, daß Mehrfachumlenkungen für denselben Teilnehmer nötig werden. Das kann aber bedeuten, daß Netzbetreiber Aufwendungen für Teilnehmer erbringen müssen, die ihrem Netz nicht mehr angehören und damit auch nicht mehr unbedingt Einnahmen bringen.

Eine andere bekannte Möglichkeit des Vorgehens besteht darin, mit Hilfe eines intelligenten Netzes, das dem Telekommunikationsnetz überlagert ist und das an zentraler Stelle eine globale Datenbasis enthalt, bei jedem Verbindungsaufbau die Zugehörigkeit des gerufenen Teilnehmers zu einem bestimmten Betreibernetz oder gar die Vermittlungsstelle, an der der Teilnehmer angeschlossen ist, zu bestimmen. Hierfür ist jedoch eine entsprechende Infrastruktur erforderlich und bei großen Teilnehmeranschlußzahlen werden auch die mit solchen Bestimmungen verbundenen dynamischen Belastungen ein nicht mehr tragbares Ausmaß annehmen. Hinzu kommt, daß in diesem Fall (wie auch bei dem Verfahren mit den Umlenkverbindungen) eine rufnummernunabhängige Adressierung der Teilnehmer erforderlich ist.

Die Aufgabe der Erfindung besteht darin, ein Verfahren zum Vermitteln von Fernmelderufen zu Teilnehmern eines Telekommunikationsnetzes anzugeben, durch das ein Anschlußwechsel der Teilnehmer von einer Vermittlungsstelle zu einer anderen unter Beibehaltung der ursprünglichen Rufnummer einen gegenüber der bisherigen Vorgehensweise in dieser Situation geringeren administrativen und infrastrukturellen Aufwand mit sich bringt.

Diese Aufgabe wird durch ein Vermittlungsverfahren mit den Merkmalen des Patentanspruches 1 gelöst.

Durch das erfindungsgemäße Verfahren erfolgt die Einrichtung einer Umlenkverbindung zu einem Teilnehmer, der nicht mehr an der ursprünglichen Vermittlungsstelle angeschlossen ist, selbsttätig, wobei wegen eines 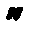 Selbstlerneffektes" der Vermittlungsstellen nur einmal nach einem erfolgten Wechsel der Teilnehmerlokalisierung dienende Prozeduren abzuwickeln sind. Das heißt also, daß vom Telekommunikationssystem selbsttätig die neue Ziel-Vermittlungsstelle bzw. das neue Zielnetz ausfindig gemacht und die entsprechende Information in einem Speicher für Folgerufe zwischengespeichert wird. Sollte durch einen erneuten Anschaltewechsel diverser Teilnehmer der Speicherinhalt im Laufe der Zeit nicht aktuell bleiben, dann werden die Lokalisierungsprozeduren erneut gestartet und automatisch eine Aktualisierung der vermittlungsstelleninternen Datenbasis durchgeführt.

Weitere Ausgestaltungen der Erfindung sind in Unteransprüchen gekennzeichnet.

Bei der Ausgestaltung nach Anspruch 2 erfolgt die Ansteuerung einer Datenbasis in Form einer Signalisierungsverbindung. Es werden also Ressourcen für Kommunikationsverbindungen nicht in Anspruch genommen.

Eine solche Signalisierungsverbindung führt gemäß Anspruch 3 zu einer anderen Vermittlungsstelle, die auf Verdacht bzw. nach einer vorgegebenen Suchreihenfolge ausgewählt wird. Dies ist dann von Vorteil ist, wenn die Datenbasis einer solchen Vermittlungsstelle Angaben über die gesamte Anschlußsituation des Netzes enthält.

Bei der Ausführungsform gemäß Anspruch 4 führt eine solche Signalisierungsverbindung zu einer Datenbank des für die betreffende andere Vermittlungsstelle zuständigen intelligenten Netzes, was dann von Vorteil ist, wenn die Datenbasen der einzelnen Vermittlungsstellen nur Angaben über die eigene Anschlußsituation enthalten.

Gemäß Anspruch 5 erfolgt die Ansteuerung einer Datenbasis durch Fortführung der betroffenen Kommunikationsverbindung zu einer als Zielort angenommenen Vermittlungsstelle oder zumindest zu einer Vermittlungsstelle, die einem angenommenen Zielnetz angehört. Es wird dabei nach einer vorgegebenen Reihenfolge vorgegangen. Dies ist dann zweckmäßig wenn nur relativ wenige alternative Vermittlungsstellen bzw. Teilnetze als neuer Anschlußort des gerufenen Teilnehmers in Frage kommen und damit die Wahrscheinlichkeit der unnötigen Belegung der Ressourcen für die Herstellung dieses Teils der Kommunikationsverbindung relativ klein ist. Falls die dabei betroffene andere Vermittlungsstelle die richtige ist, wird bei dieser Variante die endgültige Verbindungsherstellung in kürzerer Zeit erreicht sein.

Nachstehend wird die Erfindung anhand eines Ausführungsbeispiels unter Bezugnahme auf eine Zeichnung näher erläutert.

In der Zeichnung zeigen:
Figur 1 eine Konfiguration eines aus mehreren Teilnetzen verschiedener Betreiber bestehenden Ortsnetzes,
Figur 2 ein eine Variante des erfindungsgemäßen Verfahrens beschreibendes Ablaufdiagramm.

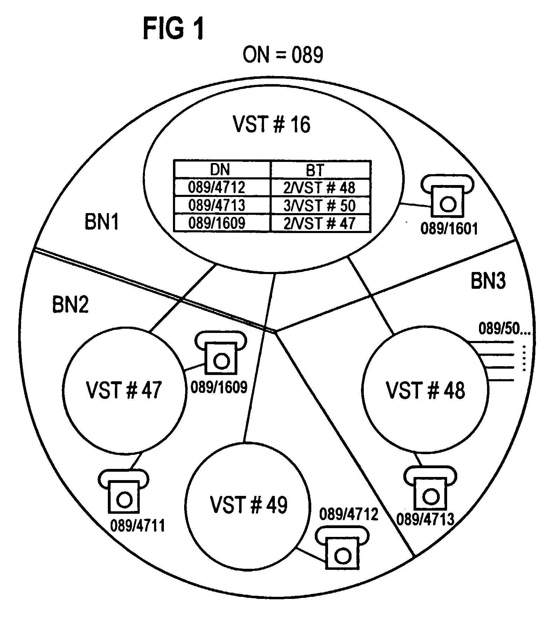

In der Figur 1 ist ein Ortsnetz, beispielsweise das Ortsnetz München mit der Ortsnetzkennzahl ON = 089 angedeutet, das in Teilnetze BN1, BN2 und BN3 dreier unterschiedlicher Betreiber B1, B2 und B3 unterteilt sein möge.

Im Teilnetz BN1 ist eine Ortsvermittlungsstelle VST#16 hervorgehoben, an die unter anderem ein Teilnehmer mit der Rufnummer 089/1601 angeschlossen ist.

Im Teilnetz BN2 sind zwei Ortsvermittlungsstellen VST#47 und VST#48 hervorgehoben. An die Vermittlungsstelle VST#47 sind unter anderen Teilnehmer mit den Rufnummern 089/4711 und 089/1609 angeschlossen. Beim Teilnehmer mit der Rufnummer 089/4711 handelt es sich, wie die Vermittlungsstellenkennzahl 47 zeigt, um einen originär an diese Vermittlungsstelle angeschlossenen Teilnehmer, wogegen der Teilnehmer mit der Rufnummer 089/1609 ursprünglich an der Vermittlungsstelle VST#16 des Teilnetzes BN1 angeschlossen war und unter Beibehaltung seiner Rufnummer zur Vermittlungsstelle VST#47 übergewechselt ist. An die Vermittlungsstelle VST#48 des Teilnetzes BN2 ist unter anderen ein Teilnehmer mit der Rufnummer 089/4712 angeschlossen, der von der Vermittlungsstelle VST#47 her übergewechselt ist.

Im Teilnetz BN3 ist eine Vermittlungsstelle VST#50 hervorgehoben, an die neben originär angeschlossenen Teilnehmern mit der die Vermittlungsstellenkennzahl 50 aufweisenden Rufnummern ein Teilnehmer mit der Rufnummer 089/4713 angeschlossen ist, der ursprünglich an der Vermittlungsstelle VST#47 des Teilnetzes BN2 angeschlossen war.

Bei der Vermittlungsstelle VST#16 ist noch ein Datenspeicher angedeutet, in dessen Teil DN Rufnummern von in dem betrachteten Ortsnetz befindlichen Teilnehmern eingetragen sind, die ihren Anschalteort gewechselt haben. Im Bereich BT dieses Speichers finden sich Angaben über den derzeitigen Anschalteort, nämlich den Betreiber, zu dessen Teilnetz der betreffende Teilnehmer nun gehört und im vorliegenden Fall über die konkrete Vermittlungsstelle dieses Teilnetzes, an der der betreffende Teilnehmer konkret angeschlossen ist.

Speicher mit solchen Einträgen können in sämtlichen Vermittlungsstellen der Teilnetze enthalten sein. Wenn die Teilnetze so organisiert sind, daß ein Übergang vom Teilnetz eines Betreibers zu demjenigen eines anderen immer über eine bestimmte Vermittlungsstelle der Teilnetze führt, kann auch vorgesehen sein, eine derartige Datenspeicherung nur in diesen bestimmten Vermittlungsstellen vorzunehmen.

Bei einem Ruf des vorerwähnten Teilnehmers mit der Rufnummer 089/1601 an einen Teilnehmer mit der Rufnummer 089/4711, der an die Vermittlungsstelle VST#47 des Teilnetzes BN2 eines zweiten Betreibers angeschlossenen ist, ergeben sich keine Besonderheiten, da der Teilnehmer 089/4711 von Anfang an der Vermittlungsstelle VST#47 angeschlossen war.

Wenn z. B. jedoch der an die Vermittlungsstelle VST#48 angeschlossene Teilnehmer mit der Rufnummer 089/4712 erstmalig nach seinem Anschlußwechsel von der Vermittlungsstelle VST#47 zur Vermittlungsstelle VST#48 vom Teilnehmer mit der Rufnummer 089/1601 aus angerufen wird, besteht bei der Vermittlungsstelle VST#16 noch keine Kenntnis über einen solchen Anschlußwechsel, so daß zunächst die Vermittlungsstelle VST#47 angesteuert wird und von dort eine Signalisierungsmeldung über den Umstand des Anschlußwechsels empfangen wird. Von der Vermittlungsstelle VST#16 des rufenden Teilnehmers wird daher erfindungsgemäß durch Ansteuern einer Datenbasis die Vermittlungsstelle, an der der gerufene Teilnehmer nunmehr angeschlossen ist, hier also die Vermittlungsstelle VST#48 ermittelt und im Speicher DN/BT der Vermittlungsstelle VST#16 ein entsprechender Dateneintrag vorgenommen, der die Rufnummer 089/4712 sowie ein den Betreiber B2 bzw. das Teilnetz BN2 und die Vermittlungsstelle VST#48 kennzeichnende Kennziffer umfaßt.

Entsprechende Vorgänge spielen sich bei Rufen des Teilnehmers 089/1601 zu einem Teilnehmer mit der Rufnummer 089/4713 ab, der von der Vermittlungsstelle VST#47 des Teilnetzes BN3 an die Vermittlungsstelle VST#50 des Teilnetzes BN3 übergewechselt ist und bei einem Ruf des Teilnehmers 089/1601 zum Teilnehmer 089/1609, der von der Vermittlungsstelle VST#16 des Teilnetzes BN1 zur Vermittlungsstelle VST#47 des Teilnetzes BN2 übergewechselt ist.

Es kann auch vorgesehen sein, diese Datenbasiseinträge in Datenbasen sämtlicher anderer Vermittlungsstellen des Teilnetzes vorzunehmen, zu dem die betrachtete Vermittlungsstelle gehört. Hierzu werden zu diesen anderen Vermittlungsstellen bestehende Signalisierungswege ausgenutzt.

Bei nachfolgenden Rufen von der Vermittlungsstelle VST#16 aus zu Teilnehmern, mit den Rufnummern 089/4712, 089/4713 und 089/1609 erfolgt die Rufabwicklung auf der Grundlage dieser gespeicherten Anschlußlagedaten.

Es könnte dabei so vorgegangen werden, daß bei jedem von einer Vermittlungsstelle ausgehenden Ruf zunächst der Speicher DN/BT daraufhin abgesucht wird, ob die Rufnummer des gerufenen Teilnehmers enthalten ist. Solange Rufe zu Teilnehmern, die ihren Anschalteort verändert haben, prozentual noch gering sind, wird in der Praxis eine solche Suche jedoch erst dann vorgenommen werden, wenn nach Ansteuerung der nicht mehr zuständigen Vermittlungsstelle von dort eine Signalisierung der fehlenden Anschaltung des gerufenen Teilnehmers erfolgt ist.

In jedem Fall aber hat das erfindungsgemäße Verfahren zur Folge, daß mit der Ermittlung der Anschlußlage bzw. der Umlenkung an die nach einem Anschlußwechsel gültige Vermittlungsstelle die Vermittlungsstelle, von der ein Teilnehmer weggezogen ist nichts mehr zu tun hat, sofern es sich bei dieser Vermittlungsstelle nicht um diejenige handelt, an der auch der rufende Teilnehmer einer gewünschten Kommunikationsverbindung angeschlossen ist. Die Betreiber müssen also für Fernmeldeverbindungen, von denen sie wegen eines Teilnehmerumzugs nicht mehr betroffen sind, keine kostenintensiven Aufwendungen mehr machen.

Die Ansteuerung einer Datenbasis zur Ermittlung der als erneuter Anschalteort anzusteuernden Vermittlungsstelle oder zumindest des Zielnetzes, der diese Vermittlungsstelle angehört, kann, wie angegeben, auf verschiedene Arten erfolgen.

Es kann zu diesem Zweck eine Signalisierungsverbindung zu der Datenbasis einer als neuer Anschalteort in Frage kommenden Vermittlungsstelle oder zu der als Zugangsvermittlungsstelle dienende Vermittlungsstelle eines in Frage kommenden Zielnetzes aufgebaut werden. Sofern in diesen Datenbasen keine Angaben über den gerufenen Teilnehmer enthalten sind, wird eine solche Signalisierungsverbindung an weitere in Frage kommende Vermittungsstellen gerichtet, wobei vorzugsweise eine vorgegebene Ansteuerungsreihenfolge eingehalten wird. Wenn in einem intelligenten Netz eine globale Datenbasis über die gesamte Anschlußlage vorhanden ist, wird eine solche Signalisierungsverbindung vorzugsweise dorthin gerichtet.

Die Datenermittlung über Signalisierungsverbindungen hat den Vorteil, daß Ressourcen für den Aufbau von Kommunikationsverbindungen im Zusammenhang mit der Suche nach der Anschlußlage verzogener Teilnehmer nicht in Anspruch genommen zu werden brauchen.

Unter der eingangs genannten Bedingung relativ weniger alternativ in Frage kommender Vermittlungsstellen als neuer Anschalteort kann die Ermittlung der Anschlußlagedaten auch durch Weiterführung der Kommunikationsverbindung zu einer in Frage kommenden Vermittlungsstelle erfolgen.

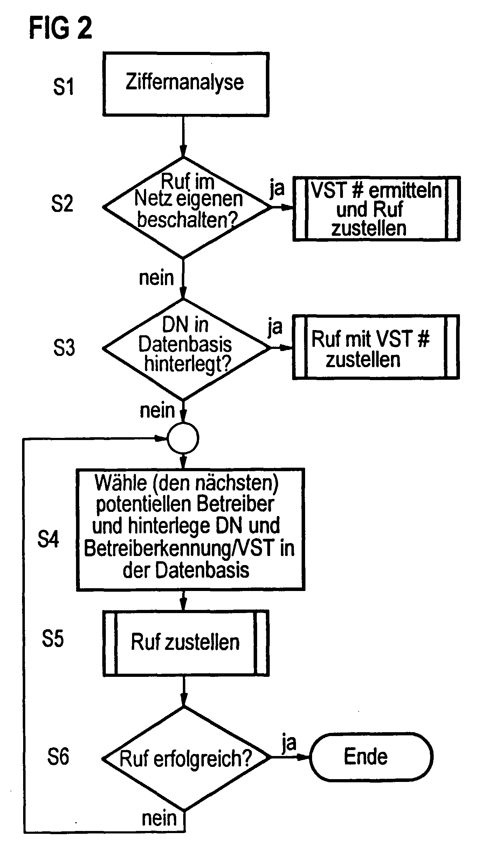

Nachstehend wird anhand des in Figur 2 gezeigten Ablaufdiagramms auf diese Variante des erfindungsgemäßen Verfahrens noch näher eingegangen.

Im Zuge der Abwicklung eines Verbindungsaufbaus wird in der Vermittlungsstelle des rufenden Teilnehmers oder in einer Vermittlungsstelle, über die der Übergang von dem Teilnetz, dem diese Ursprungsvermittlungsstelle angehört, zu Teilnetzen anderer Betreiber erfolgt, durch eine Ziffernanalyse gemäß den Schritten S1 und S2 ermittelt, ob der gerufene Teilnehmer an der Vermittlungsstelle oder an einer anderen Vermittlungsstelle desselben Netzbetreibers angeschaltet ist. Wäre dies der Fall, würde der Ruf diesem Teilnehmer zugestellt, gegebenenfalls nach vorheriger Ermittlung der Vermittlungsstelle, an der der Teilnehmer angeschlossen ist. Da der Teilnehmer aber voraussetzungsgemäß zu einer anderen Vermittlungsstelle übergewechselt ist, und dementsprechend eine Fehlermeldung erfolgt, wird im nächsten Schritt geprüft, ob die Rufnummer des gerufenen Teilnehmers in der hierfür vorgesehenen Datenbasis der suchenden Vermittlungsstelle hinterlegt ist, s. Schritt S3. Da vorausgesetzt wurde, daß es sich um den ersten Anruf des Teilnehmers nach dessen Umzug handelt, wird diese Datenbasis die Rufnummer nicht enthalten. Es wird daher gemäß Schritt S4 ein von der betrachteten Vermittlungsstelle aus erreichbares Netz eines anderen Betreibers ausgewählt und zu diesem Betreibernetz hin eine Verbindung hergestellt. Wenn das Netz eines Betreibers mehrere Vermittlungsstellen umfaßt, wird der Zugang zu einem solchen Betreibernetz in der Regel über eine Durchgangsvermittlungsstelle (Gateway) führen. In der Datenbasis der betrachteten suchenden Vermittlungsstelle wird in diesem Zusammenhang die Rufnummer DN des gerufenen Teilnehmers sowie eine Kennung dieser Durchgangsvermittlungsstelle des anderen Betreibers bzw. sofern das angesteuerte Betreibernetz nur eine einzige Vermittlungsstelle umfaßt, die Kennung dieser Vermittlungsstelle eingetragen.

Wenn der gerufene Teilnehmer tatsächlich an einer Vermittlungsstelle des ausgewählten Betreibers angeschlossen ist, dann wird diese Kommunikationsverbindung zum Abschluß gebracht, siehe hierzu Schritt S6 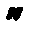 Ende".

War jedoch der Ruf nicht erfolgreich, dann werden durch die suchende Vermittlungsstelle unter Auslösung der bestehenden Verbindung zum Netz des nicht zuständigen Betreibers und unter Löschung der entsprechenden Datenbasiseinträge das Netz eines weiteren in Frage kommenden Betreibers ausgewählt und die entsprechenden Prozeduren bezüglich dieses Betreibernetzes gemäß den Schritten S4 bis S6 wiederholt.

Wenn auf diesem Weg kein Betreiber gefunden werden kann, an dem der gerufene Teilnehmer angeschaltet ist, kommt es zur endgültigen Abweisung des Rufs.

Bei nachfolgenden an einen der Teilnehmer gerichteten Rufen, deren Anschalteort auf diese Weise ermittelt worden ist, wird die erwähnte Suche in der Datenbasis der suchenden Vermittlungsstelle gemäß Schritt S3 die tatsächlichen Anschschlußdaten ergeben. Die Herstellung der Verbindung zum gerufenen Teilnehmer kann dann ohne weitere Suchprozeduren zum Abschluß gebracht werden.

## Patentansprüche

1. Verfahren zum Vermitteln von Fernmelderufen zu Teilnehmern eines Telekommunikationsnetzes, in dem die Teilnehmer bei einem Anschlußwechsel von einer Vermittlungsstelle zu einer anderen ihre ursprüngliche Rufnummer beibehalten können, **gekennzeichnet** durch folgende Merkmale:
a) wird im Zuge des Aufbaus einer Kommunikationsverbindung festgestellt, daß die Rufnummer des gerufenen Teilnehmers (z. B. 089/4712) nicht mehr an der ursprünglichen Vermittlungsstelle (VST#47) angeschlossen ist, dann wird durch Ansteuern einer und im Bedarfsfall weiterer in Frage kommender Datenbasen die Vermittlungsstelle (VST#48), an der die Rufnummer nunmehr angeschlossen ist oder zumindest das Zielnetz (BN2), dem eine solche Vermittlungsstelle angehört, ermittelt,
b) im Falle einer erfolgreichen Ermittlung werden die entsprechenden Daten in einem vermittlungseigenen Speicher (DN/BT) der suchenden Vermittlungsstelle (VST#16) endgültig hinterlegt und der aktuelle sowie nachfolgende denselben gerufenen Teilnehmer (089/4712) betreffende Verbindungsversuche unter Verwendung der gespeicherten Daten behandelt.

2. Verfahren nach Anspruch 1,
**dadurch gekennzeichnet**, daß zur Ansteuerung einer Datenbasis eine Signalisierungsverbindung hergestellt wird.

3. Verfahren nach Anspruch 2,
**dadurch gekennzeichnet**, daß die Signalisierungsverbindung zu einer Datenbasis einer als Zielort oder als zum Zielnetz gehörenden in Frage kommenden Vermittlungsstelle führt.

4. Verfahren nach Anspruch 2,
**dadurch gekennzeichnet**, daß die Signalisierungsverbindung zu einer Datenbank eines intelligenten Netzes hergestellt wird.

5. Verfahren nach Anspruch 1,
**dadurch gekennzeichnet**, daß zur Ansteuerung einer Datenbasis die den gerufenen Teilnehmer betreffende Kommunikationsverbindung zu einer als Zielort oder als zum Zielnetz gehörenden in Frage kommenden Vermittlungsstelle weitergeführt wird.
